Europäisches Patentamt

(19) European Patent Office

Office européen des brevets

(11) Publication number: **0 007 292**
**B1**

(12) **EUROPEAN PATENT SPECIFICATION**

(45) Date of publication of patent specification: **30.12.81**

(21) Application number: **79850044.3**

(22) Date of filing: **16.05.79**

(51) Int. Cl.³: **F 16 K 31/524,**
**F 16 K 3/02, F 16 K 11/06**

(54) Valve.

(30) Priority: **17.05.78 SE 7805629**

(43) Date of publication of application:
**23.01.80 Bulletin 80/2**

(45) Publication of the grant of the European patent:
**30.12.81 Bulletin 81/52**

(84) Designated Contracting States:
**CH DE FR GB IT NL**

(56) References cited:
**DD - A - 93 905**
**DE - B - 2 019 558**
**DE - U - 1 857 738**
**US - A - 2 662 721**
**US - A - 2 873 085**

(73) Proprietor: **Gustavsson, Thure Valter**
**Tegnérgatan 18**
**S-38100 Kalmar (SE)**

(72) Inventor: **Gustavsson, Thure Valter**
**Tegnérgatan 18**
**S-38100 Kalmar (SE)**

(74) Representative: **Svanfeldt, Hans-Ake et al,**
**Erik Lindquist Patentbyra AB P.O. Box 5386**
**S-102 46 Stockholm (SE)**

Courier Press, Leamington Spa, England.

## Valve

The present invention generally relates to valves, in particular to valves for controlling and distributing liquid streams from two connections to a third connection or alternatively from one connection to two connections. In connection with warm-water systems there is a particular need of control valves of the type mentioned, for example so-called shunt valves.

Shunt valves may be designed as so-called slide valves in which the liquid flow is controlled by using a plate provided with ports or recesses, said plate being rotatively disposed in relation to openings in a valve housing. When using this type of valve, the operation of which is performed by turning an operating shaft, it is difficult to bring about a complete sealing of one of the outlets or inlets of the valve. The valve can be arranged so that the plane slide is urged against the valve housing by a compression spring. As the contact surface between the slide and the valve housing is comparatively large, requirements are severe as far as smoothness of the slide and the valve housing is concerned. Thus, valves of this type are expensive in manufacture.

Another type of shunt valve is the so-called seat valve which has an axially movable slide provided with shoulders adapted sealingly to contact valve seats provided in the valve housing. The slide can be operated either by an axially movable operating shaft or by a rotary operating shaft, the rotary motion of which is transformed into an axial shifting movement of the slide e.g. (US—A—2 662 721). If the operating shaft is axially shiftable, problems are encountered if electrical control motors are to be used for operating the valve because the action of such motors normally is based on a rotary function. To a certain extent this problem can be avoided if a shunt valve having rotary operating shaft is used.

Independently of which type of operating shaft is used, the important problem of seat valves resides in the fact that the slide must be urged against the valve seating by an external force applied to the operating shaft or by an external torque applied to the operating shaft. This external force or external torque respectively is produced by particular auxiliary units included in the valve. These auxiliary units tend to increase the cost of using seat valves.

It is the purpose of the present invention to provide a valve avoiding the disadvantages of previously known control valves. Thus, the valve of the present invention does not require any auxiliary units with the aid of which the slide is held tightly against the valve seat. Moreover, the requirements as far as manufacturing tolerances in respect to the component parts of the valve are concerned may be low without impairing the function of the valve. Not either does wear of the constructive element participating in the transmission of power between the operating shaft and the slide interference — within reasonable limits — with the sealing action of the valve.

The characteristic features of the valve appear from the attached claims.

Some different embodiments of the valve according to the invention will be described hereafter by reference to the enclosed drawings in which

Fig. 1 is a partial cross-sectional view of a valve according to the invention,

Fig. 2 is a partial cross-sectional view along line II—II in Fig. 1, and

Fig. 3 illustrates an alternative embodiment of a detail of the power transmission between the operating shaft and the slide in a valve according to the present invention.

The valve according to the invention will be described in detail hereafter in the form of a shunt valve. However, the invention is not restricted to shunt valves but comprises all types of seat valves.

The valve comprises a valve housing 1 having three ports of which two are provided with valve seats 2. A slide 3 is axially shiftable in the valve housing. The position of the slide may be controlled by means of an operating shaft 4 journalled in the valve housing by means of a liquid-tight bushing 5. At its lower end the operating shaft is provided with a laterally offset stub-shaft 6 co-operating with a coupling member 7 shaped as a wedge having a central bore. The wedge, on the one hand, is placed onto the stub-shaft (at the bore) and, on the other hand, is fitted into a wedge-shaped groove 8 extending transversally of the longitudinal direction of the slide. At either end surface the slide is provided with a number of grooves 9, the geometrical shape of which is adapted to permit control of the liquid flow in the valve in dependence of the rotation of the operating shaft. At either end the slide is provided with a shoulder 10.

The function of the valve may be described as follows: When the operating shaft is turned the movement of the stub-shaft 6 due to the eccentric disposition of the stub-shaft in relation to the operating shaft 4 is converted into an axial shifting movement of the slide due to the fact that the wedge-shaped coupling member 7 is moved laterally of the slide while at the same time the slide is shifted longitudinally. Depending on the shape of the slide different amounts of water will flow for each adjustment of the operating shaft through the various ports in the valve housing. When the slide is moved to either of the final positions defined by each of valve seats 2, the corresponding shoulder 10 abuts against the respective valve seat causing the liquid flow through the corresponding port to cease. A gasket is provided between each shoulder 10 and the corresponding valve seat 2. Once such contact has been established, additional turning of the operating shaft will substantially not involve additional movement of the slide but definitely a movement of the wedge-shaped coupling member 7 which will slide upwardly on the stub-shaft 6 while contacting either of the oblique side surfaces of the wedge groove 8. The movement along the stub-shaft will take place against the action of a force performed by a compression spring 11 surrounding the stub-shaft. Hereby an automatic latching of the system is obtained and in the final positions the slide will be urged against the corresponding valve seat under a power which is maintained without the application of an external moment onto the operating shaft 4. The automatic latching action is obtained by selecting the angle between the normal of the plane in which forces act between the stub-shaft and the slide and the axial direction of movement of the slide within a suitable interval determined, among other factors, by the frictional properties of the surfaces. The automatic latching function is determined by the turning moment acting on the operating shaft due, on the one hand, to the force acting on the end surface of the slide as a consequence of the liquid pressure and, on the other hand, the frictional forces acting between the wedge-shaped coupling member 7 and the wedge-shaped groove 8, said last-mentioned frictional forces acting in a direction perpendicular to the longitudinal axis of the slide. According to a preferred embodiment of the invention this additional turning is performed until the rotary moment acting on operating shaft 4 and emanating from the liquid pressure on the one end surface of the slide is 0, i.e. until the moment arm of the force in question becomes 0, which will happen when the angle between the axis line of the slide and the imaginary plane through the axis lines of both the operating and stub-shafts 4 and 6 respectively is 0.

The importance of the oblique surfaces between the coupling member 7 and the slide 3 will appear from the following considerations: assume that these surfaces were not oblique but disposed at right angles to the longitudinal axis of the slide. In order to enable the slide to be moved to its end position, there will be required, in addition to, among other factors, highly exactly determined distances between the operating and stub-shafts, also a powerful external moment acting on the operating shaft, in particular during the last phase of the movement of the coupling member in the groove of the slide when the final position is being approached. By using oblique surfaces compensation is made for distance variations between for example the stub- and operating shafts while at the same time the external moment required for driving the slide towards the end position is reduced due to the fact that the coupling member starts climbing upwardly on the stub-shaft and thereby reduces the frictional forces acting between the coupling member and the slide during the final phase of the rotary movement.

In a suitable embodiment of the invention the wedge-shaped surfaces are inclined at an angle of about 75° to the longitudinal direction of the slide.

The embodiment here described of the wedge-shaped coupling member 7 which is urged against the slide by means of a compression spring 11, means that wear of the various parts of the valve can be compensated by a shifting movement of the wedge-shaped coupling member in the longitudinal direction of the stub-shaft 6. The necessary requirement for this is that an interspace is provided between the bottom surface of wedge groove 7 and the bottom surface of the wedge-shaped coupling member. Vibrations and oscillations observed in conventional valves are considerably reduced in the valve according to the present invention due to the oblique surfaces and the action of a compression spring 11.

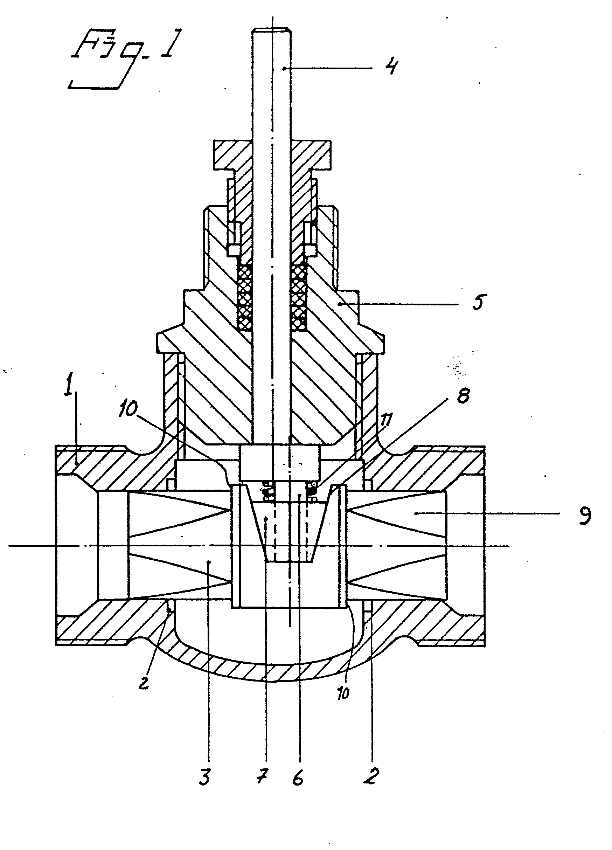

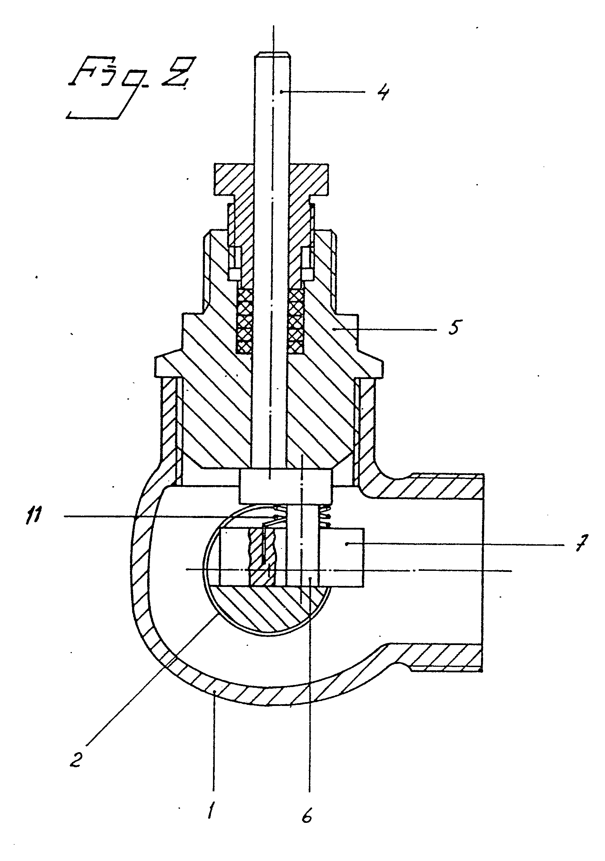

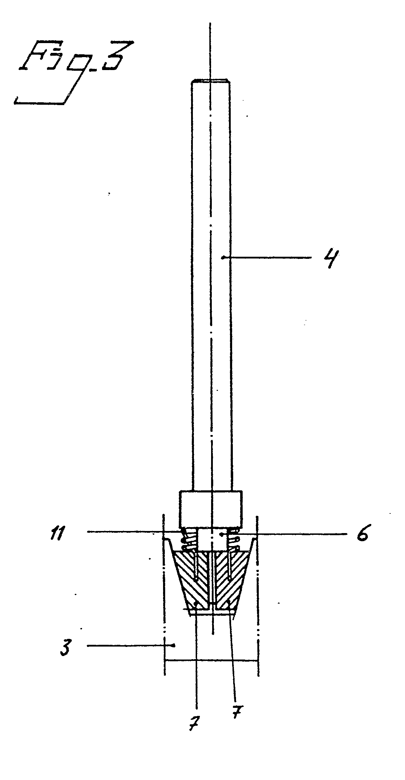

Fig. 3 shows an alternative embodiment of the coupling member which may be imagined to have been obtained by cleaving the wedge shown in Fig. 1 and 2 perpendicularly to the longitudinal direction of the slide. The two wedge halves which are placed around stub-shaft 6 are provided with one bore each receiving one end each of compression spring 10. Due to the interspace formed between the two wedge halves 7 it is possible, due to the above-mentioned shifting of the wedge-shaped coupling member in relation to the slide, to compensate also for wear and bad fit of the stub-shaft or the arcuate surfaces receiving the stub-shaft.

The embodiments of the invention as described above can be modified and varied in many respects within the basic idea of the invention.

## Claims

1. Valve comprising a valve housing (1), a slide (3) axially shiftable in the valve housing, at least one valve seat (2) for the slide, a rotatable operating shaft (4) having at the one end a laterally offset stub-shaft (6) for transforming the rotary movement of the operating shaft into a corresponding axial shift of the slide towards its end position as defined by the valve seat (2), characterized by a coupling member (7) disposed on the stub-shaft and having a first oblique surface, a second oblique surface provided on the slide (3) and complementary to the first oblique surface, additional turning movement of the operating shaft, when the slide is in its end position, being absorbed by mutual sliding movement between the first and second surfaces and a complementary movement of the coupling member (7) along the stub-shaft (6).

2. Valve as claimed in claim 1, characterized in that the coupling member (7) is an elongate, wedge-shaped body having a bore adapted to receive the stub-shaft, the said first oblique surface corresponding to one of the oblique surfaces of the body.

3. Valve as claimed in claim 2, characterized in that the wedge-shaped body is split in its longitudinal direction in a plane parallel to the bore causing two wedge halves (7) to be formed.

4. Valve as claimed in claims 2 or 3, characterized by a compression spring (11) placed on the stub-shaft between the operating shaft (4) and the wedge-shaped body.

5. Valve as claimed in any of the preceding claims, characterized by a straight, wedge-shaped groove (8) provided in the slide perpendicularly to the longitudinal axis of the slide, the second oblique surface being formed by the surface of the groove facing the valve seat.

6. Valve as claimed in claims 2 and 5, characterized in that the side walls of the wedge-shaped body (7) are in contact with the side walls of the wedge-shaped groove (8) and that the bottom of the groove and the bottom surface of the wedge-shaped body are spaced from each other.

7. Valve as claimed in any of claims 2 and 3, characterized in that both ends of the compression spring are inserted into respective bores in respective halves of the split body.

8. Valve as claimed in any of the preceding claims, characterized in that the slide is axially shiftable between two valve seats each defining one end position of the slide (3).

**Revendications**

1. Vanne comprenant un carter de vanne (1), un tiroir (3) déplaçable axialement dans le carter de vanne, au moins un siège de vanne (2) pour le tiroir, un arbre de manoeuvre rotatif (4) comprenant à une extrémité un embout (6) décalé latéralement pour transformer le mouvement de rotation de l'arbre de manoeuvre en un déplacement axial correpondant du tiroir vers sa position terminale tell que définie par le siège de vanne (2), caractérisée par un organe de couplage (7) disposé sur l'embout et comprenant une première surface oblique, une seconde surface oblique prévue sur le tiroir (3) et complémentaire de la première surface oblique, la poursuite du mouvement de rotation de l'arbre de manoeuvre, lorsque le tiroir est dans sa position terminale, se traduisant par un mouvement de glissement mutuel entre les première et seconde surfaces et un mouvement complémentaire de l'organe de couplage (7) le long de l'embout (6).

2. Vanne selon la revendication 1, caractérisée en ce que l'organe de couplage (7) est un corps allongé en forme de coin comprenant un alésage adapté pour recevoir l'embout, ladite première surface oblique correspondant à l'une des surfaces obliques de ce corps.

3. Vanne selon la revendication 2, caractérisé en ce que le corps en forme de coin est fendu en direction longitudinale selon un plan par parallèle à l'alésage, provoquant la formation de deux moitiés (7) de coin.

4. Vanne selon l'une quelconque des revendications 2 et 3, caractérisée par un ressort de compression (11) placé sur le tronçon d'arbre entre l'arbre de manoeuvre (4) et le corps en forme de coin.

5. Vanne selon l'une quelconque des revendications présédentes, caractérisée par une gorge droite et en form de coin (8) prévue dans le tiroir perpendiculairement à l'axe longitudinal de ce tiroir, la seconde surface oblique étant formée par la surface de la gorge faisant face au siège de vanne.

6. Vanne selon les revendications 2 et 5, caractérisée en ce que les parois latérales du corps (7) en forme de coin sont en contact avec les parois latérales de la gorge (8) en forme de coin, et en ce que le fond de la gorge et la surface de fond du corps en forme de coin soint espacés l'un de l'autre.

7. Vanne selon l'une quelconque des revendications 3 et 4, caractérisée en ce que les deux extrémitiés du ressort de compression sont insérées dans des alésages respectifs des moitiés respectives du corps fendu.

8. Vanne selon l'une quelconque des revendications présédentes, caractérisée en ce que le tiroir peut se déplacer axialement entre deux sièges de vanne définissant chacun une position terminale du tiroir (3).

**Patentansprüche**

1. Ventil mit einem Ventilgehäuse (1), einem im Ventilgehäuse axial beweglichen Schieber (3), mindestens einem Ventilsitz (2) für den Schieber und einer drehbaren Betätigungsstange (4), die an ihrem einen Ende einen seitlich versetzten Zapfen (6) zum Umwandeln der Drehbewegung der Betätigungsstange in eine entsprechende axiale Bewegung des Schiebers in seine durch den Ventilsitz (2) bestimmte Endlage aufweist, dadurch gekennzeichnet, dass am Zapfen (6) ein Kupplungsglied (7) mit einer ersten schrägen Fläche vorgesehen ist und dass sich eine zweite, in bezug auf die erste komplementäre, schräge Fläche am Schieber (3) befindet, wobei eine zusätzliche Drehung der Betätigungsstange, wenn sich der Schieber in seiner Endlage befindet, durch eine gegenseitige Verschiebung der ersten und zweiten fläche und eine entsprechende Bewegung des Kupplungsgliedes (7) entlang dem Zapfen (6) absorbiert wird.

2. Ventil nach Anspruch 1, dadurch gekennzeichnet, dass das Kupplungsglied (7) ein langgestreckter, im Querschnitt keilförmiger Körper mit einer Bohrung zur Aufnahme des Zapfens (6) ist, wobei die erste schräge Fläche der einen schrägen Fläche des Körpers entspricht.

3. Ventil nach Anspruch 2, dadurch gekennzeichnet, dass der keilförmige Körper (7) in seiner Längsrichtung in einer zur Bohrung parallelen Ebene so gespalten ist, dass zwei Keilhälften (7) gebildet sind.

4. Ventil nach Anspruch 2 oder 3, dadurch gekennzeichnet, dass eine Druckfeder (11) auf dem Zapfen (6) zwischen der Betätigungsstange (4) und dem keilförmigen Körper (7) angeordnet ist.

5. Ventil nach einem der vorhergehenden Ansprüche, dadurch gekennzeichnet, dass eine gerade keilförmige Nut (8) im Schieber (3) rechtwinklig zur Längsachse des Schiebers vorgesehen ist, wobei die zweite schräge Fläche die dem Ventilsitz (2) zugekehrten Fläche dieser Nut ist.

6. Ventil nach den Ansprüchen 2 und 5, dadurch gekennzeichnet, dass die Seitenwände des keilförmigen Körpers (7) an den Seitenwänden der keilförmigen Nut (8) anliegen und dass zwischen dem Boden der Nut und der Unterseite des keilförmigen Körpers ein freier Zwischenraum vorhanden ist.

7. Ventil nach einem der Ansprüche 2 und 3, dadurch gekennzeichnet, dass die Enden der Druckfeder (11) je in einer Bohrung in den beiden Hälften des gespaltenen keilförmigen Körpers (7) stecken.

8. Ventil nach einem der vorangehenden Ansprüche, dadurch gekennzeichnet, dass der Schieber (3) zwischen zwei Ventilsitzen (2) axial verschiebbar ist, welche je eine der Endlagen des Schiebers (3) bestimmen.

Fig. 1

*Fig. 2*

*Fig.3*

11

6

3

4

7   7